# EUROPÄISCHE PATENTSCHRIFT

(11) **EP 4 244 954 B1**
(45) Veröffentlichungstag und Bekanntmachung des Hinweises auf die Patenterteilung: **03.07.2024**
(21) Anmeldenummer: 21805888.1
(22) Anmeldetag: 02.11.2021
(51) Int. Cl.: H02K 1/18, H02K 5/24

(54) **ELEKTRISCHE MASCHINE UND WINDKRAFTANLAGE**
ELECTRICAL MACHINE AND WIND POWER PLANT
MACHINE ELECTRIQUE ET CENTRALE ELECTRIQUE EOLIENNE

(30) Priorität: 12.11.2020 EP 20207079
(43) Veröffentlichungstag der Anmeldung: 20.09.2023
(73) Patentinhaber: Flender GmbH, 46395 Bocholt (DE)
(72) Erfinder: FRIEDL, Daniel, 94081 Fürstenzell (DE); GARHAMMER, Thomas, 94124 Buechlberg (DE); GRUBER, Robert, 94099 Ruhstorf an der Rott (DE); KECELI, Mesaros Akos, 24400 Senta (RS); MEMMINGER, Oliver, 94127 Neuburg am Inn (DE); ORTMEIER, Günther, 94099 Ruhstorf an der Rott (DE); SCHIFFERER, Klaus, 94152 Neuhaus am Inn (DE); TOLDI, Laslo, 24000 Subotica (RS); VOGEL, Anatoli, 94032 Passau (DE)
(74) Vertreter: Michalski Hüttermann & Partner Patentanwälte mbB
(86) Internationale Anmeldenummer: PCT/EP2021/080309
(87) Internationale Veröffentlichungsnummer: WO 2022/101054

(56) Entgegenhaltungen:
- EP-A1- 0 367 044
- EP-A1- 2 256 904
- FR-A1- 2 192 407
- US-A1- 2020 343 778

## Beschreibung

Die Erfindung betrifft eine elektrische Maschine, insbesondere einen elektrischen Generator für eine Windkraftanlage, mit den Merkmalen des Oberbegriffs des Anspruchs 1.

Weiterhin betrifft die Erfindung eine Windkraftanlage aufweisend eine derartige elektrische Maschine.

Eine derartige elektrische Maschine bzw. eine derartige Windkraftanlage kommen beispielsweise bei der Wandlung der Energie des Windes in elektrische Energie zum Einsatz, um diese Energie dann in ein Stromnetz einzuspeisen. Solche elektrischen Maschinen weisen dabei einen im Stator drehbar gelagerten Rotor auf.

Durch Kosten- und Bauraumoptimierung und steigende Leistungsanforderungen der Windkraftanlagen werden die Generatoren und ihre Komponenten immer kompakter. Dies führt dazu, dass bei gleichbleibender Baugröße und höherer Leistung die Ständergehäuse bzw. Statorgehäuse ein geringeres Gewicht haben und höheren Betriebslasten ausgesetzt sind.

Dabei werden die vom Statorpaket angeregten Schwingungen und Betriebslasten, welche durch magnetischen Zug verursacht werden, ins Gehäuse eingeleitet. Dadurch verstärkt sich wiederum das Schwingungsverhalten, so dass die Betriebsgeräusche der Generatoren zunehmen und die maximalen Werte der Kundenanforderungen übersteigen.

Aus der EP 367 044 A1 ist eine horizontalachsige elektrische Maschine bekannt, bei der durch Abstützung des Statorblechkörpers am Gehäuse nur oben und unten und durch Abstützung des Gehäuses auf dem Fundament nur rechts und links eine elastische Aufhängung des Statorblechkörpers erreicht wird.

Aus der EP 2 256 904 A1 ist eine Unterstützungsstruktur einer rotierenden elektrischen Maschine bekannt, bei der ein Stator durch Druck auf eine halbrunde Karkasse gehalten wird.

Aus der US 2020/034 3778 A1 ist eine elektrische Maschine, insbesondere ein elektrischer Generator für eine Windkraftanlage, bekannt, aufweisend die Merkmale des Oberbegriffs des Anspruchs 1.

Aufgabe der Erfindung ist es, eine elektrische Maschine bzw. eine Windkraftanlage bereitzustellen, welche insbesondere die genannten Nachteile überwindet und die Schallisolation gegenüber dem Stand der Technik verbessert.

Eine Lösung der Aufgabe ergibt sich durch eine elektrische Maschine der eingangs genannten Art mit den Merkmalen des Anspruchs 1.

Weiterhin ergibt sich eine Lösung der Aufgabe durch eine Windkraftanlage der eingangs genannten Art dadurch, dass die Windkraftanlage die vorgeschlagene elektrische Maschine aufweist.

Die vorgeschlagene elektrische Maschine weist somit von radial innen nach radial außen den hohlzylinderförmigen Stator, dann das jeweilige Aufnahmeelement und schließlich das Statorgehäuse auf. Dabei sind der Stator, das jeweilige Aufnahmeelement und das Statorgehäuse jeweils drehfest miteinander verbunden. Üblicherweise ist innerhalb des Stators der drehbar gelagerte Rotor der elektrischen Maschine angeordnet, welcher jedoch als für das Wesen der Erfindung nicht wesentlich angesehen wird.

Das jeweilige Aufnahmeelement kann den Stator dabei in Umfangsrichtung vollständig umschließen, sodass sich die innere Abdeckungslänge über den vollen Umfang von 360° erstreckt. Möglich ist auch, dass das jeweilige Aufnahmeelement den Stator lediglich teilweise umschließt, zum Beispiel zu drei Vierteln oder zwei Dritteln, sodass sich die innere Abdeckungslänge entsprechend über 270° bzw. 240° erstreckt. Das jeweilige Aufnahmeelement und der Stator sind dabei entlang einer jeweiligen inneren Befestigungslänge miteinander verbunden.

Das Statorgehäuse kann wiederum das jeweilige Aufnahmeelement in Umfangsrichtung vollständig umschließen, sodass sich die äußere Abdeckungslänge über den vollen Umfang von 360° erstreckt. Auch hier ist möglich, dass das Statorgehäuse das jeweilige Aufnahmeelement lediglich teilweise umschließt, zum Beispiel zu zwei Dritteln oder zur Hälfte, sodass sich die äußere Abdeckungslänge entsprechend über 240° bzw. 180° erstreckt. Das Statorgehäuse und das jeweilige Aufnahmeelement sind dabei entlang einer jeweiligen äußeren Befestigungslänge miteinander verbunden.

Die Aufnahmeelemente sind dabei in axialer Richtung versetzt zueinander angeordnet. Das Statorgehäuse kann insb. mehrteilig ausgestaltet sein, wobei sich die jeweilige äußere Abdeckungslänge und die jeweilige äußere Befestigungslänge insb. auf das zusammengesetzte, mehrteilige Statorgehäuse beziehen.

Die vorgeschlagene elektrische Maschine kann, erfindungsgemäß, dabei gemäß zwei Varianten ausgebildet sein, die auch miteinander kombiniert werden können. Gemäß der ersten Variante der Erfindung st die jeweilige innere Befestigungslänge höchstens halb so groß wie die jeweilige innere Abdeckungslänge. Erstreckt sich die innere Abdeckungslänge über den vollen Umfang von 360°, so ist also gemäß dieser ersten Variante vorgesehen, dass sich die innere Befestigungslänge höchstens über den halben Umfang, d. h. 180°, erstreckt. Das bedeutet, dass das jeweilige Aufnahmeelement und der Stator höchstens in Umfangsrichtung entlang 180° miteinander verbunden sind und wiederum in Umfangsrichtung mindestens über 180° nicht miteinander verbunden sind.

Lediglich zur besseren Veranschaulichung sei der folgende Vergleich mit einer Felge eines Autos erlaubt. Die Innenseite der Felge würde dabei dem Stator entsprechen und die Außenseite der Felge dem jeweiligen Aufnahmeelement. Die Innenseite und die Außenseite der Felge sind üblicherweise mittels mehrerer Speichen miteinander verbunden, wobei die Speichen in Umfangsrichtung breiter oder schmaler ausgestaltet sein können. Die innere Abdeckungslänge von 360° bedeutet in dieser Analogie, dass die Außenseite der Felge die Innenseite vollständig umschließt. Die innere Befestigungslänge von höchstens 180° bedeutet, dass die Abdeckung der Speichen zusammengenommen höchstens den halben Umfang ausmachen, sodass zwischen den Speichen - wiederum aufaddiert in Umfangsrichtung - Aussparungen über mindestens den halben Umfang angeordnet sind.

Wird die innere Abdeckungslänge kleiner gewählt, zum Beispiel drei Viertel des vollen Umfangs bzw. 270°, so verbleibt für die innere Befestigungslänge in Umfangsrichtung ein entsprechend kleinerer Abschnitt, hier z.B. höchstens 135°.

Gemäß der zweiten Variante der Erfindung st die jeweilige äußere Befestigungslänge höchstens so groß wie zwei Drittel der jeweiligen äußeren Abdeckungslänge. Erstreckt sich die äußere Abdeckungslänge über den vollen Umfang von 360°, so ist also gemäß dieser zweiten Variante vorgesehen, dass sich die äußere Befestigungslänge höchstens über zwei Drittel des Umfangs, d. h. 240°, erstreckt. Das bedeutet, dass das Statorgehäuse und das jeweilige Aufnahmeelement höchstens in Umfangsrichtung entlang 240° miteinander verbunden sind und wiederum in Umfangsrichtung mindestens über 120° nicht miteinander verbunden sind.

Wird die äußere Abdeckungslänge kleiner gewählt, zum Beispiel drei Viertel des vollen Umfangs bzw. 270°, so verbleibt für die äußere Befestigungslänge in Umfangsrichtung ein entsprechend kleinerer Abschnitt, hier z.B. höchstens 180°. Besonders gute Ergebnisse lassen sich erzielen, wenn erfindungsgemäß die beiden Varianten kombiniert werden, d.h. dass sich die jeweilige innere Befestigungslänge höchstens entlang der Hälfte der jeweiligen inneren Abdeckungslänge erstreckt und dass sich gleichzeitig die jeweilige äußere Befestigungslänge höchstens entlang von zwei Dritteln der jeweiligen äu-ßeren Abdeckungslänge erstreckt.

Insbesondere ist die vorgeschlagene elektrische Maschine als dynamoelektrische Maschine ausgestaltet.

Die Lösung gelingt somit gemäß der ersten Variante, indem die Kontaktflächen vom Stator bzw. Statorpaket zum jeweiligen Aufnahmeelement bzw. Paketaufnahmering reduziert wird. Der Stator bzw. Statorpaket wird somit nur stellenweise mit dem jeweiligen Aufnahmeelement bzw. Paketaufnahmering verbunden. Weiterhin gelingt die Lösung gemäß der zweiten Variante, in dem die Kontaktfläche vom jeweiligen Aufnahmeelement bzw. von der jeweiligen Paketaufnahme zum Statorgehäuse reduziert wird. Das jeweilige Aufnahmeelement bzw. der jeweilige Paketaufnahmering wird somit nur stellenweise mit dem Statorgehäuse verbunden. Wie bereits erwähnt, lassen sich besonders gute Ergebnisse erzielen, in dem die beiden genannten Kontaktflächen reduziert werden.

Die vorgeschlagene elektrische Maschine hat dabei insbesondere vorteilhafte Schwingungseigenschaften und kann daher mit leiseren Betriebsgeräuschen betrieben werden. Dies kommt unter anderem auch dadurch zustande, dass der Stator während des Betriebs pulsiert und schwingt und dabei Geräusche erzeugt, die an das Gehäuse übertragen werden können und dabei versteckt werden könnten. Durch die oben erläuterte Reduktion der Kontaktfläche(n) wird zum einen die direkte Übertragung der Schwingungen des Stators an das jeweilige Aufnahmeelement und schließlich an das Statorgehäuse erschwert. Zum anderen wird dadurch eine freiere Schwingung des Stators gegenüber des jeweiligen Aufnahmeelementes bzw. des jeweiligen Aufnahmeelementes gegenüber dem Stator Gehäuse ermöglicht.

Beispielsweise kann die jeweilige innere Befestigungslänge bzw. können jeweilige innere Befestigungsabschnitte zumindest überwiegend im Bereich eines jeweiligen Schwingungsknotens des während einer vorgebbaren Drehzahl betriebenen und damit schwingenden Stators angeordnet sein. Alternativ oder zusätzlich kann die jeweilige äußere Befestigungslänge bzw. können jeweilige äußere Befestigungsabschnitte im Bereich eines jeweiligen Schwingungsbauches des während einer vorgebbaren Drehzahl betriebenen und damit schwingenden Stators angeordnet sein. Die inneren und äußeren Befestigungsabschnitte werden dabei weiter unten noch genauer erläutert. Je nach Auslegung der elektrischen Maschine ist dabei auch denkbar, dass die jeweilige innere Befestigungslänge bzw. können jeweilige innere Befestigungsabschnitte zumindest überwiegend im Bereich eines jeweiligen Schwingungsbauches und/oder die jeweilige äußere Befestigungslänge bzw. können jeweilige äußere Befestigungsabschnitte im Bereich eines jeweiligen Schwingungsknotens des während einer vorgebbaren Drehzahl betriebenen und damit schwingenden Stators angeordnet sind.

Die vorgeschlagene elektrische Maschine hat bspw. den Vorteil, dass das Statorgehäuse mit geringeren Blechdicken bei steigender Baugröße ausgeführt werden kann und dass auf zusätzliche Versteifungsrippen zumindest teilweise verzichtet werden kann. Dadurch spiegelt sich ein Kostenvorteil wider. Dadurch lassen sich weiterhin steigende Baugrößen und Leistungen realisieren bei gleichzeitiger Einhaltung der kundenseitig tolerierten Schwingungsstärken und Geräuschwerte.

Bei einer vorteilhaften Ausgestaltung der Erfindung ist das jeweilige Aufnahmeelement als Aufnahmering ausgestaltet, welcher den Stator in Umfangsrichtung vollständig umschließt. Durch die Ausformung des jeweiligen Aufnahmeelementes als Aufnahmering lassen sich gute schwingungstechnische Eigenschaften erzielen, wobei gleichzeitig noch eine ausreichend große mechanische Stabilität erreicht wird, welche für die Übertragung großer Drehmomente vom Stator an das Statorgehäuse erforderlich ist.

Bei einer weiteren vorteilhaften Ausgestaltung der Erfindung ist das jeweilige Aufnahmeelement in Umfangsrichtung entlang der jeweiligen inneren Befestigungslänge mit dem Stator mechanisch lösbar und/oder formschlüssig verbunden ist.

Die mechanisch lösbare Verbindung lässt sich bspw. durch eine Verschraubung des jeweiligen Aufnahmeelementes mit dem Stator erreichen, wobei sich verschraubte Bereiche in Umfangsrichtung entlang der jeweiligen inneren Befestigungslänge erstrecken. Bspw. kann eine Verbindung des jeweiligen Aufnahmeelementes mit dem Stator bspw. durch Zylinderstifte erreicht bzw. gesichert werden. Das Drehmoment kann dann von den Zylinderstiften übertragen werden. Alternativ wäre auch ein Schrumpfsitz als formschlüssige Verbindung möglich.

Bei einer weiteren vorteilhaften Ausgestaltung der Erfindung ist das Statorgehäuse in Umfangsrichtung entlang der jeweiligen äußeren Befestigungslänge mit dem jeweiligen Aufnahmeelement mechanisch lösbar oder stoffschlüssig verbunden, insbesondere verschweißt.

Analog zu der zuvor erläuterten vorteilhaften Ausgestaltung, kann die mechanisch lösbare Verbindung durch eine Verschraubung des Statorgehäuses mit dem jeweiligen Aufnahmeelement erreicht werden, wobei sich verschraubte Bereiche in Umfangsrichtung entlang der jeweiligen äußeren Befestigungslänge erstrecken. Alternativ kann eine stoffschlüssige Verbindung des Statorgehäuses mit dem jeweiligen Aufnahmeelement vorgesehen sein, insbesondere eine Verschweißung, welche sich in Umfangsrichtung entlang der jeweiligen äußeren Befestigungslänge erstreckt.

Bei der Erfindung erstreckt sich die jeweilige innere Befestigungslänge höchstens entlang 120° und mindestens entlang 50°, insbesondere entlang 50° bis 80°, in Umfangsrichtung.

Bei einer jeweiligen inneren Befestigungslänge von höchstens 120° lassen sich noch genügend große Drehmomente zuverlässig von dem Stator zum jeweiligen Aufnahmeelement übertragen. Außerdem kann damit gleichzeitig eine ausreichende Reduktion der Übertragung von Statorschwingungen an das jeweilige Aufnahmeelement und somit eine ausreichende Reduktion von Betriebsgeräuschen erreicht werden. Besonders gute Ergebnisse lassen sich erzielen, wenn sich die jeweilige innere Befestigungslänge in Umfangsrichtung entlang 50° bis 80°, bspw. etwa 70°, erstreckt. Vorzugsweise umschließt dabei das jeweilige Aufnahmeelement den Stator in Umfangsrichtung vollständig.

Bei der Erfindung erstreckt sich die jeweilige äußere Befestigungslänge höchstens entlang 200° und mindestens entlang 60°, insbesondere entlang 80° bis 120°, in Umfangsrichtung. Bei einer jeweiligen äußeren Befestigungslänge von höchstens 200° lassen sich wiederum noch genügend große Drehmomente zuverlässig von dem jeweiligen Aufnahmeelement an das Statorgehäuse übertragen. Außerdem kann damit gleichzeitig auch eine ausreichende Reduktion der Übertragung von Schwingungen des jeweiligen Aufnahmeelementes an das Statorgehäuse und somit eine ausreichende Reduktion von Betriebsgeräuschen erreicht werden. Besonders gute Ergebnisse lassen sich erzielen, wenn sich die jeweilige äußere Befestigungslänge in Umfangsrichtung entlang 60° bis 200°, insbesondere 80° bis 120°, erstreckt.

Erfindungsgemäß unterteilt sich die jeweilige innere Befestigungslänge in Umfangsrichtung in mehrere, voneinander beabstandete innere Befestigungsabschnitte, vorzugsweise in mindestens drei bzw. höchstens sechs innere Befestigungsabschnitte.

Die jeweilige innere Befestigungslänge kann somit in mehrere einzelne innere Befestigungsabschnitte untergliedert sein, die sich in Umfangsrichtung um den Stator herum verteilen und sich gegenseitig nicht berühren. Bspw. können die inneren Befestigungsabschnitte dabei um einen Schwerpunkt herum angeordnet sein, der entweder mit der Längsachse des Stators zusammenfällt oder diesem - im Vergleich zu dem Außendurchmesser des Stators - recht nahe ist. Da die elektrische Maschine vorzugsweise mit einer waagerecht ausgerichteten Längsachse betrieben wird und der Stator unter Umständen mehrere Tonnen liegen kann, kann dieser Schwerpunkt auch unterhalb der Längsachse des Stators angeordnet sein. Die Unterteilung der der jeweiligen inneren Befestigungslänge in mehrere innere Befestigungsabschnitte erleichtert die Übertragung großer Drehmomente und trägt weiterhin dazu bei, vergleichsweise wenige Schwingungen vom Stator an das jeweilige Aufnahmeelement zu übertragen und somit die Betriebsgeräusche der elektrischen Maschine zu reduzieren.

Die einzelnen inneren Befestigungsabschnitte können sich dabei in Umfangsrichtung bspw. zwischen 10° und 50°, insbesondere zwischen 20° und 40° erstrecken.

Besonders gute Ergebnisse lassen sich erzielen, wenn mindestens drei und/oder höchstens sechs innere Befestigungsabschnitte vorgesehen sind.

Bei dem oben erläuterten Vergleich mit einer Autofelge würden die inneren Befestigungsabschnitte einzelnen Speichen der Felge entsprechen.

Erfindungsgemäß unterteilt sich die jeweilige äußere Befestigungslänge in Umfangsrichtung in mehrere, voneinander beabstandete äußere Befestigungsabschnitte, vorzugsweise in mindestens zwei bzw. höchstens sechs äußere Befestigungsabschnitte.

Die jeweilige äußere Befestigungslänge kann somit in mehrere einzelne äußere Befestigungsabschnitte untergliedert sein, die sich in Umfangsrichtung um das jeweilige Aufnahmeelement herum verteilen und sich gegenseitig nicht berühren. Bspw. können die äußeren Befestigungsabschnitte dabei um einen Schwerpunkt herum angeordnet sein, der entweder mit der Längsachse des Stators zusammenfällt oder diesem - im Vergleich zu dem Außendurchmesser des Stators - recht nahe ist. Da die elektrische Maschine vorzugsweise mit einer waagerecht ausgerichteten Längsachse betrieben wird und der Stator unter Umständen mehrere Tonnen liegen kann, kann dieser Schwerpunkt auch unterhalb der Längsachse des Stators angeordnet sein. Die Unterteilung der der jeweiligen äußeren Befestigungslänge in mehrere äußere Befestigungsabschnitte erleichtert die Übertragung großer Drehmomente und trägt weiterhin dazu bei, vergleichsweise wenige Schwingungen vom jeweiligen Aufnahmeelement an das Statorgehäuse zu übertragen und somit die Betriebsgeräusche der elektrischen Maschine zu reduzieren.

Die einzelnen äußeren Befestigungsabschnitte können sich dabei in Umfangsrichtung bspw. zwischen 5° und 200°, insbesondere zwischen 40° und 80° erstrecken. Bspw. kann ein recht schmaler, äußerer Befestigungsabschnitt im Querschnitt oben angeordnet sein und sich lediglich entlang 5° bis 20° erstrecken, wobei ein oder zwei breite, äußere Befestigungsabschnitte im Querschnitt unten angeordnet ist bzw. sind. Ist ein solcher breiter, äußerer Befestigungsabschnitte unten vorgesehen, kann dieser sich entlang bis zu 190° erstrecken. Sind zwei solcher breiter, äußerer Befestigungsabschnitte unten vorgesehen, können die sich jeweils entlang 50-80°, bspw. ca. 70° erstrecken und sich dabei im Querschnitt senkrecht zur Längsachse gegenüber liegen.

Besonders gute Ergebnisse lassen sich erzielen, wenn mindestens zwei und/oder höchstens sechs innere Befestigungsabschnitte vorgesehen sind.

Bei dem oben erläuterten Vergleich mit einer Autofelge würden die äußeren Befestigungsabschnitte einzelnen Speichen der Felge entsprechen.

Bei einer weiteren vorteilhaften Ausgestaltung der Erfindung weist die elektrische Maschine dabei mindestens so viele jeweilige innere Befestigungsabschnitte wie jeweilige äußere Befestigungsabschnitte auf, vorzugsweise mehr jeweilige innere Befestigungsabschnitte als jeweilige äußere Befestigungsabschnitte.

Gute Ergebnisse hinsichtlich der Reduktion der Schwingungsübertragung vom Stator an das Statorgehäuse und hinsichtlich Geräuschreduktion lassen sich dadurch erreichen, dass mindestens so viele jeweilige innere Befestigungsabschnitte wie jeweilige äußere Befestigungsabschnitte vorgesehen sind. Besonders gute Ergebnisse lassen sich erzielen, wenn die Anzahl der jeweiligen inneren Befestigungsabschnitte die Anzahl der jeweiligen äußeren Befestigungsabschnitte übersteigt.

Erfindungsgemäß ist dabei zumindest einer der jeweiligen inneren Befestigungsabschnitte in Umfangsrichtung versetzt zu den jeweiligen äußeren Befestigungsabschnitten angeordnet, wobei vorzugsweise zwei oder mehr oder alle der jeweiligen inneren Befestigungsabschnitte in Umfangsrichtung versetzt zu den jeweiligen äußeren Befestigungsabschnitten angeordnet sind.

Durch den Versatz in Umfangsrichtung zumindest eines des jeweiligen inneren Befestigungsabschnitten gegenüber den jeweiligen äußeren Befestigungsabschnitte kann erreicht werden, dass das jeweilige Aufnahmeelement besonders gut Schwingungen des Stators absorbieren kann, dabei diese Schwingungen aber nicht an das Statorgehäuse weitergibt. Besonders gut gelingt dies, wenn zwei oder mehr bzw. alle der jeweiligen inneren Befestigungsabschnitte gegenüber den jeweiligen äußeren Befestigungsabschnitte den in Umfangsrichtung versetzt sind.

Erfindungsgemäß ist der zumindest eine jeweilige innere Befestigungsabschnitt in Umfangsrichtung vollständig gegenüber den jeweiligen äußeren Befestigungsabschnitte versetzt, sodass kein Überlapp vorliegt. Ordentliche Ergebnisse lassen sich jedoch noch immer erzielen, wenn der zumindest eine jeweilige innere Befestigungsabschnitt in Umfangsrichtung überwiegend gegenüber den jeweiligen äußeren Befestigungsabschnitten versetzt ist, d.h. der zumindest eine jeweilige innere Befestigungsabschnitt ist zumindest zur Hälfte seiner Erstreckung in Umfangsrichtung gegenüber den jeweiligen äußeren Befestigungsabschnitte versetzt und überlappt damit weniger als die Hälfte seiner Erstreckung in Umfangsrichtung mit dem jeweiligen äußeren Befestigungsabschnitt.

Erfindungsgemäß überlappt dabei zumindest einer der jeweiligen inneren Befestigungsabschnitte in Umfangsrichtung mit zumindest einem der jeweiligen äußeren Befestigungsabschnitte, wobei vorzugsweise zwei oder mehr oder alle der jeweiligen inneren Befestigungsabschnitte in Umfangsrichtung mit zumindest einem der jeweiligen äußeren Befestigungsabschnitte überlappen, wobei wenn die inneren und die äußeren Befestigungsabschnitte in Umfangsrichtung nicht versetzt angeordnet sind, sondern überlappen, dann zur Reduzierung der Schallübertragung auf das Statorgehäuse im Betriebszustand der Maschine, also bei waagrecht verlaufender Zentralachse, die inneren und die äußeren Befestigungsabschnitte nur im unteren rechten und im unteren linken Quadranten im Bereich der Auflagevorrichtungen, mittels welcher das während des Betriebs der elektrischen Maschine auftretende Drehmoment an ein Fundament oder an eine Auflagefläche abgebbar ist, angeordnet sind, oder, wenn zusätzlich oben zentral eine Befestigungslänge vorgesehen ist, die inneren und die äußeren Befestigungsabschnitte auch mittig oben im Bereich der vertikalen Zentralachse angeordnet sind.

Durch den Überlapp in Umfangsrichtung des zumindest einen jeweiligen inneren Befestigungsabschnittes mit zumindest einem der jeweiligen äußeren Befestigungsabschnitte kann die Übertragung eines ausreichend großen Drehmoments von dem Stator an das jeweilige Aufnahmeelement und schließlich an das Statorgehäuse vereinfacht werden. Je nach Ausgestaltung der elektrischen Maschine kann es dabei vorteilhaft sein, wenn zwei oder mehr oder alle der jeweiligen inneren Befestigungsabschnitte in Umfangsrichtung mit zumindest einem der jeweiligen äußeren Befestigungsabschnitte überlappen.

Oftmals genügt dabei schon ein teilweiser Überlapp zur Übertragung auch großer Drehmomente, insbesondere wenn weniger als die Hälfte der Erstreckung des zumindest einen jeweiligen inneren Befestigungsabschnittes in Umfangsrichtung mit dem jeweiligen äußeren Befestigungsabschnitt überlappt. In einigen Beispielen überlappt der zumindest eine jeweilige innere Befestigungsabschnitt jedoch vollständig in Umfangsrichtung mit zumindest einem der jeweiligen äußeren Befestigungsabschnitte.

Vorzugsweise überlappen dabei nur eine bis zwei jeweiligen inneren Befestigungsabschnitte mit zumindest einem der jeweiligen äußeren Befestigungsabschnitte, wobei zumindest einer der jeweiligen inneren Befestigungsabschnitte mit einem der jeweiligen äußeren Befestigungsabschnitte nicht überlappt.

Bei einer weiteren vorteilhaften Ausgestaltung der Erfindung ist zwischen dem jeweilige Aufnahmeelement und dem Stator außerhalb der jeweiligen inneren Befestigungslänge in radialer Richtung ein innerer Luftspalt angeordnet.

Der innere Luftspalt ist in Umfangsrichtung somit insbesondere je zwischen zwei benachbarten jeweiligen inneren Befestigungsabschnitten angeordnet. Vorzugsweise ist der innere Luftspalt zumindest so groß, wie die radialen Amplituden von während dem Betrieb des Stators auftretenden Schwingungen bzw. Verformungen des Stators. Somit können Schäden vermieden werden, indem sichergestellt wird, dass der Stator während seines Betriebs das jeweilige Aufnahmeelement nicht außerhalb der jeweiligen inneren Befestigungslänge berührt.

Bei einer weiteren vorteilhaften Ausgestaltung der Erfindung ist zwischen dem Statorgehäuse dem jeweiligen Aufnahmeelement außerhalb der jeweiligen äußeren Befestigungslänge in radialer Richtung ein äußerer Luftspalt angeordnet.

Der äußere Luftspalt ist in Umfangsrichtung somit insbesondere je zwischen zwei benachbarten jeweiligen äußeren Befestigungsabschnitten angeordnet. Vorzugsweise ist der äußere Luftspalt zumindest so groß, wie die radialen Amplituden von während dem Betrieb des Stators auftretenden Schwingungen bzw. Verformungen des jeweiligen Aufnahmeelementes. Somit können Schäden vermieden werden, indem sichergestellt wird, dass das jeweilige Aufnahmeelement während des Betriebs des Stators das Statorgehäuse nicht außerhalb der jeweiligen äu-ßeren Befestigungslänge berührt. Insbesondere wird der äußere Luftspalt so klein wie möglich gewählt, damit die zirkulierende Kühlluft so gut wie möglich abgeschottet wird und damit ein Lackieren des äußeren Luftspalts noch möglich ist. Gute Ergebnisse lassen sich mit einem äußeren Luftspalt von 3 mm bis 30 mm erzielen, wobei der Bereich von 7 mm bis 15 mm bevorzugt ist.

Bei einer weiteren vorteilhaften Ausgestaltung der Erfindung weist der Stator einen Außendurchmesser von zumindest 900 mm auf, wobei die elektrische Maschine eine elektrische Leistung von zumindest 1,5 MW aufweist.

Vorzugsweise weist die elektrische Maschine dabei eine Leistung von ca. 5 MW auf. Bspw. der Stator einen Außendurchmesser von ca. 1300 mm. Die elektrische Maschine kann bspw. eine Masse von mehreren Tonnen, insbesondere mehr als 8 t aufweisen.

Bei einer weiteren vorteilhaften Ausgestaltung der Erfindung weist die elektrische Maschine bzw. das Statorgehäuse zumindest eine Auflagevorrichtung, bspw. eine Fußwange und/oder eine Fußaufhängung, auf, mittels welcher das während des Betriebs der elektrischen Maschine auftretende Drehmoment an ein Fundament bzw. an eine Auflagefläche der elektrischen Maschine abgebbar ist. Vorzugsweise ist die jeweilige Auflagevorrichtung auf axialer Höhe zumindest eines der Aufnahmeelemente angeordnet. D. h., bei einem Querschnitt durch die elektrische Maschine senkrecht zur Längsachse werden sowohl eines der Aufnahmeelemente als auch die jeweilige Fußwange bzw. die jeweilige Fußaufhängung geschnitten. Diese Ausgestaltung kann sich als vorteilhaft erweisen, wenn besonders große Drehmomente zu übertragen sind. Bei einigen Ausgestaltungen können vorteilhafte Schwingungseigenschaften und somit eine Geräuschreduzierung während des Betriebs erreicht werden, wenn die jeweilige Auflagevorrichtung in axialer Richtung versetzt zu den Aufnahmeelementen angeordnet ist, bspw. ca. in der Mitte zwischen zwei benachbarten Aufnahmeelementen.

Die vorgeschlagene Windkraftanlage weist insbesondere einen Turm und eine Gondel auf, in welcher die elektrische Maschine untergebracht ist. Weiterhin weist die Windkraftanlage insbesondere drei Propellerblätter auf, welche drehfest mit dem Rotor der elektrischen Maschine verbunden sind. Vorzugsweise ist die elektrische Maschine dabei als elektrischer Generator ausgestaltet.

Im Folgenden wird die Erfindung anhand der in den Figuren dargestellten Ausführungsbeispiele näher beschrieben und erläutert. Es zeigen:
- FIG 1-3: eine beispielhafte elektrische Maschine gemäß dem Stand der Technik,
- FIG 4-8: ein erstes Ausführungsbeispiel der vorgeschlagenen elektrischen Maschine,
- FIG 9: ein Aufnahmeelement des ersten Ausführungsbeispiels der vorgeschlagenen elektrischen Maschine,
- FIG 10: ein zweites Ausführungsbeispiel der vorgeschlagenen elektrischen Maschine,
- FIG 11: ein drittes Ausführungsbeispiel der vorgeschlagenen elektrischen Maschine,
- FIG 12: ein viertes Ausführungsbeispiel der vorgeschlagenen elektrischen Maschine,
- FIG 13: ein fünftes Ausführungsbeispiel der vorgeschlagenen elektrischen Maschine, und
- FIG 14: ein Ausführungsbeispiel der vorgeschlagenen Windkraftanlage.

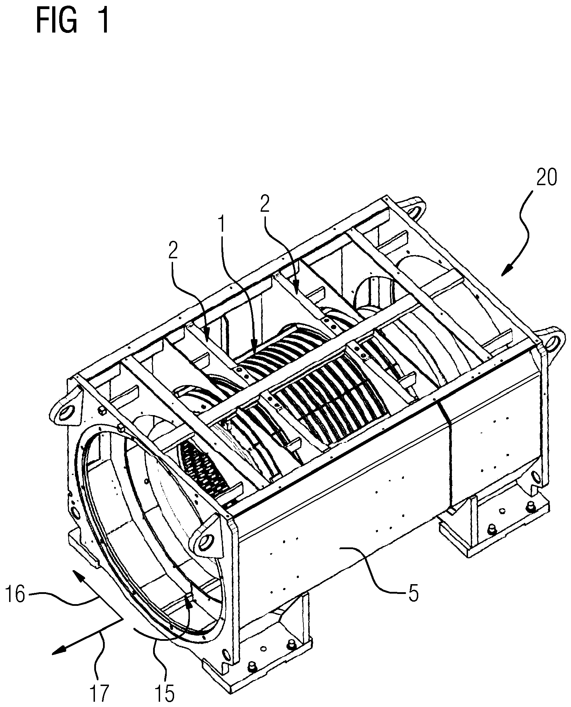

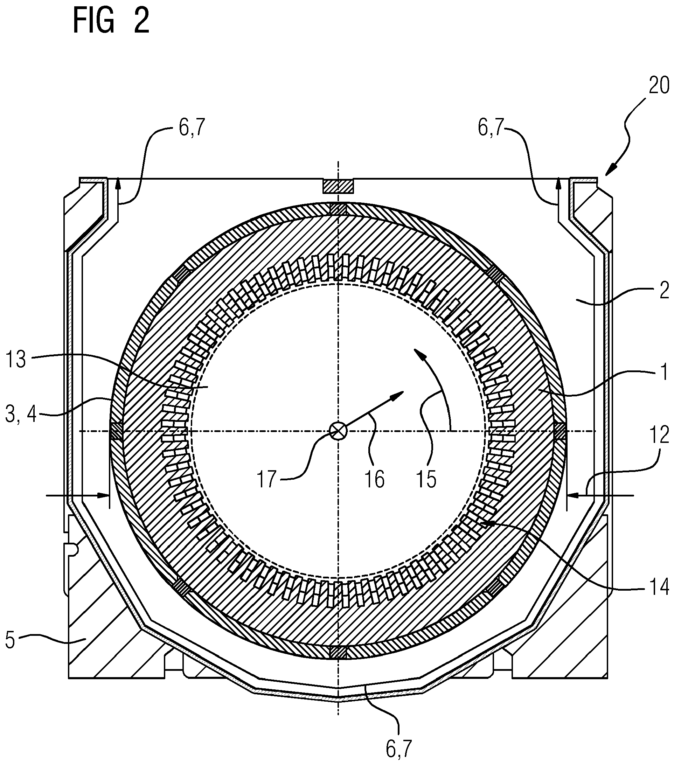

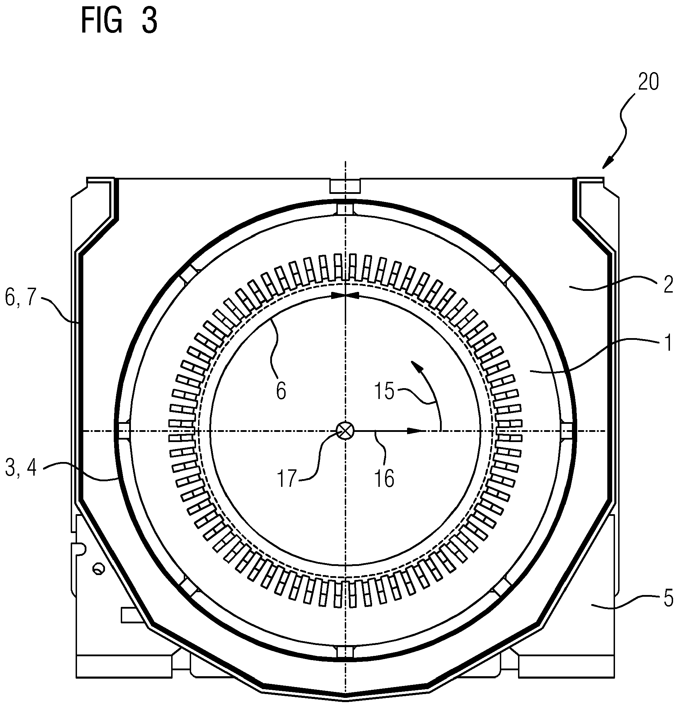

Die Figuren 1 bis 3 zeigen eine beispielhafte elektrische Maschine 20 gemäß dem Stand der Technik. Dabei zeigt die Figur 1 eine perspektivische Ansicht der elektrischen Maschine 20 von seitlich oben und die Figuren 2 und 3 zeigen einen Querschnitt durch die elektrische Maschine 20 senkrecht zur Längsachse und zur axialen Richtung 17 auf Höhe einer der beiden Aufnahmeelemente 2.

Die elektrische Maschine 20 weist einen hohlzylinderförmigen Stator 1 auf, in welchem üblicherweise ein Rotor 13 drehbar gelagert ist, wie in Figur 2 durch die gestrichelte Linie angedeutet. Der Rotor 13 ist dabei in radialer Richtung 16 innerhalb des Stators 1 angeordnet, welcher einen Außendurchmesser 12 aufweist. Weiterhin weist die elektrische Maschine 20 zwei Aufnahmeelemente 2 auf, die den Stator 1 jeweils in Umfangsrichtung 15 vollständig umschließen und dabei in Umfangsrichtung 15 durchgehend, d. h. über den vollen Umfang, mit dem Stator 1 verbunden sind. Die beiden Aufnahmeelemente 2 sind dabei in axialer Richtung 17 versetzt zueinander angeordnet. Die genannte Verbindung wird üblicherweise durch eine Verschweißung des Stators 1 mit dem jeweiligen Aufnahmeelement 2 erreicht. Die jeweilige innere Abdeckungslänge 3, entlang welcher das jeweilige Aufnahmeelement 2 den Stator 1 in Umfangsrichtung 15 umschließt, entspricht somit dem vollen Umfang von 360°. Dasselbe gilt für die jeweilige innere Befestigungslänge 4, entlang welcher das jeweilige Aufnahmeelement 2 mit dem Stator 1 verbunden ist.

Die elektrische Maschine 20 weist ferner ein Statorgehäuse 5 auf, welches das jeweilige Aufnahmeelement 2 und damit dem Stator 1 in Umfangsrichtung 15 oftmals vollständig oder zumindest überwiegend umschließt. Bei der elektrischen Maschine 20, die in den Figuren 1 bis 3 dargestellt ist, umschließt das Statorgehäuse 5 das jeweilige Aufnahmeelement 2 entlang einer jeweiligen äußeren Abdeckungslänge 6, welche etwa drei Vierteln des vollen Umfangs, d. h. ca. 270°, entspricht. Dabei ist das Statorgehäuse 5 mit dem jeweiligen Aufnahmeelement 2 entlang einer jeweiligen äußeren Befestigungslänge 7 verbunden, welche der äußeren Abdeckungslänge 6 entspricht und somit ebenfalls etwa drei Viertel des vollen Umfangs, d. h. ca. 270°, entspricht.

Der Stator 1 weist dabei in radialer Richtung 16 eingebrachte Nuten auf, in welche üblicherweise die Statorwicklungen eingebracht sind.

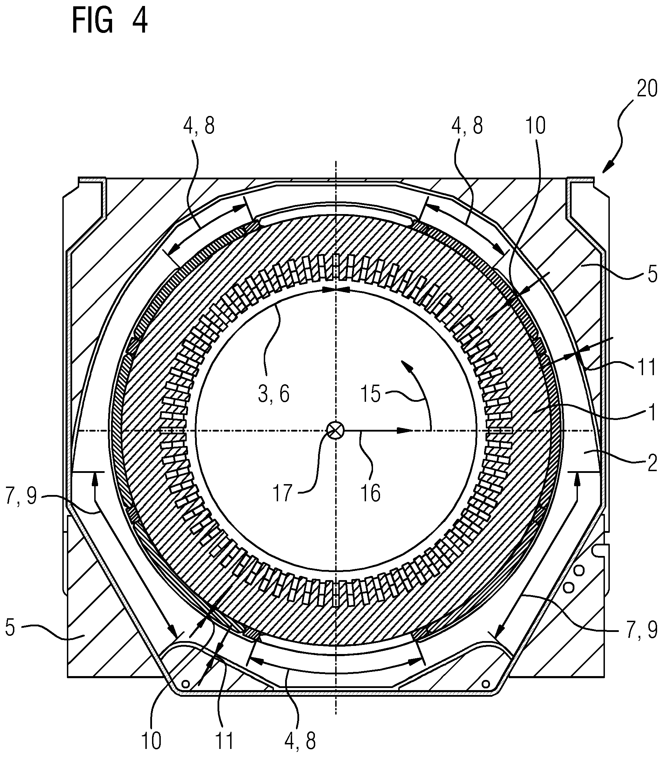

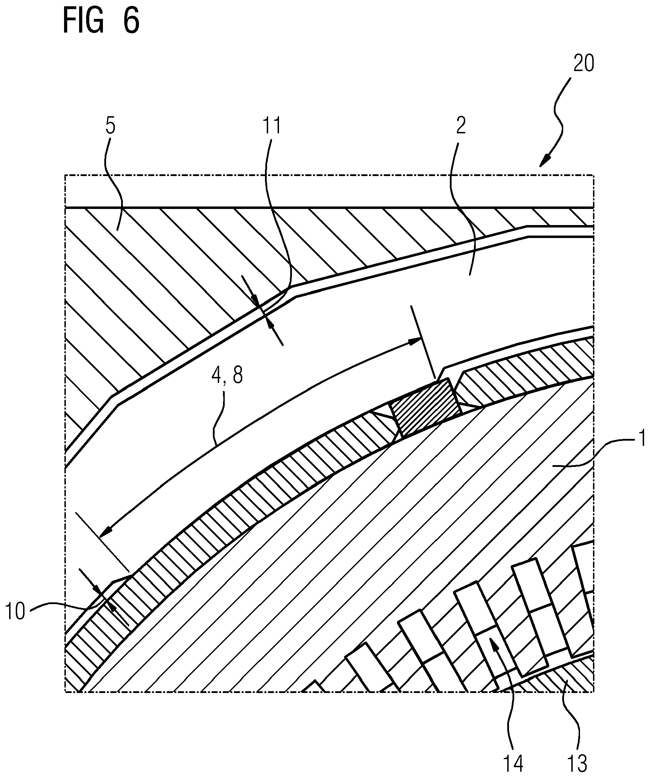

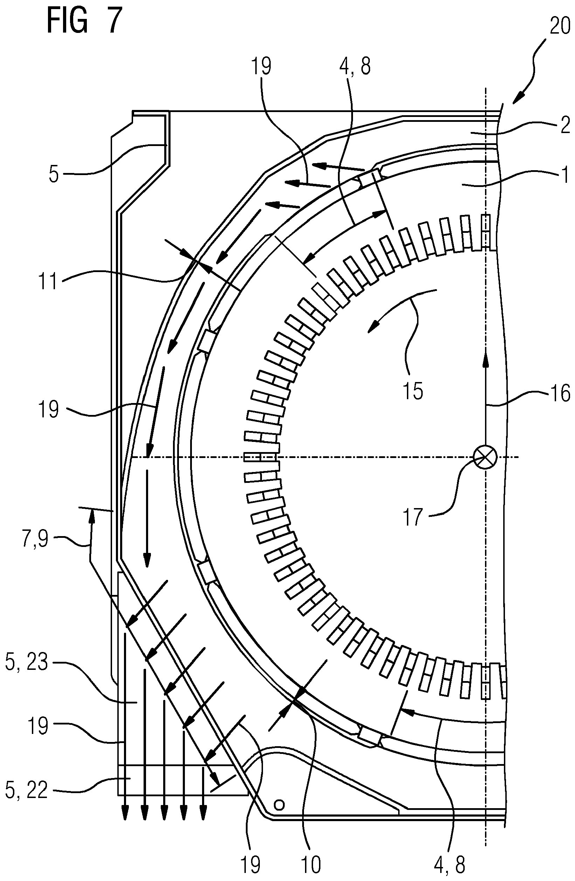

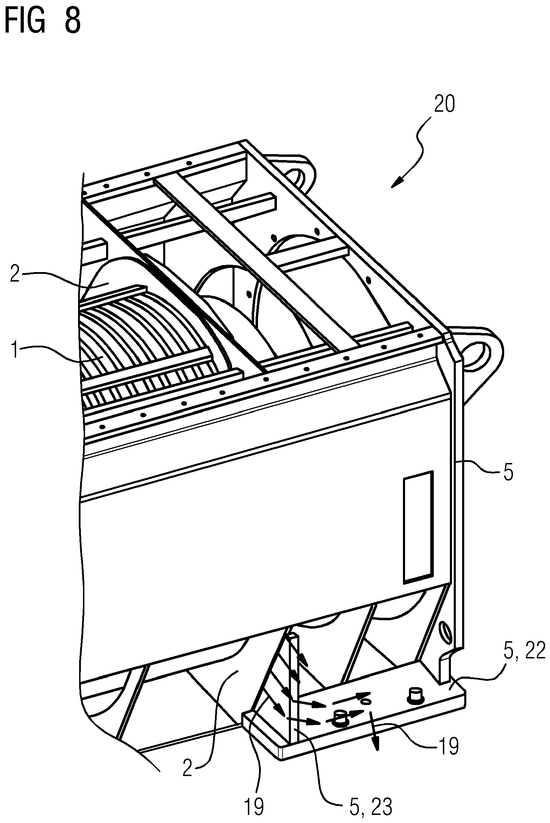

Die Figuren 4 bis 8 zeigen ein erstes Ausführungsbeispiel der vorgeschlagenen elektrischen Maschine 20, wobei gleiche Bezugszeichen wie in Figur 1 gleiche Gegenstände bezeichnen. Dabei zeigen die Figuren 4 bis 7 einen Querschnitt durch die elektrische Maschine 20 senkrecht zur Längsachse und zur axialen Richtung 17 auf Höhe einer der beiden Aufnahmeelemente 2. Die Figuren 6 und 7 zeigen dabei zwei verschiedene Ausschnitte dieser Ansicht und Figur 8 zeigt eine perspektivische Ansicht der elektrischen Maschine 20.

Bei der elektrischen Maschine 20 umschließt das Gehäuse 5 das Aufnahmeelement 2 in Umfangsrichtung vollständig, sodass sich die äußere Abdeckungslänge 6 über den vollen Umfang von 360° erstreckt. Die elektrische Maschine 2 kann dabei zwei oder mehr solcher Aufnahmeelemente 2 aufweisen. Weiterhin umschließt das dargestellte Aufnahmeelement 2 den Stator 1 in Umfangsrichtung ebenfalls vollständig, sodass sich die innere Abdeckungslänge 3 ebenfalls über den vollen Umfang von 360° erstreckt.

Die elektrische Maschine 20 zeichnet sich unter anderem dadurch aus, dass sich die innere Befestigungslänge 4, entlang welcher das jeweilige Aufnahmeelement 2 mit dem Stator 1 verbunden ist, höchstens entlang der Hälfte der jeweiligen inneren Abdeckungslänge 3 erstreckt. Dabei erstreckt sich die innere Befestigungslänge 4 bei der dargestellten elektrischen Maschine 20 über etwa 80°, d. h. etwas weniger als ein Viertel des vollen Umfangs. Die innere Befestigungslänge 4 ist dabei in drei innere Befestigungsabschnitte 8 unterteilt, von denen einer zentral unten angeordnet ist und sich über ca. 40° erstreckt und von denen die anderen beiden jeweils oben leicht versetzt zur Mitte angeordnet sind und sich jeweils über ca. 20° erstrecken. Die innere Befestigungslänge 4 ist somit in Umfangsrichtung 15 in die drei inneren Befestigungsabschnitte 8 unterteilt, die in Umfangsrichtung 15 voneinander beabstandet angeordnet sind.

Insbesondere ist somit zwischen dem jeweiligen Aufnahmeelement 2 und dem Stator 1 außerhalb der jeweiligen inneren Befestigungslänge 4 in radialer Richtung 16 ein jeweiliger innerer Luftspalt 10 angeordnet.

Weiterhin zeichnet sich die dargestellte elektrische Maschine 20 unter anderem dadurch aus, dass sich die äußere Befestigungslänge 7, entlang welcher das Statorgehäuse 5 mit dem jeweiligen Aufnahmeelement 2 verbunden ist, höchstens entlang von zwei Dritteln der jeweiligen äußeren Abdeckungslänge 6 erstreckt. Dabei erstreckt sich die äußere Befestigungslänge 7 bei der dargestellten elektrischen Maschine 20 über etwa 90°, d. h. etwa ein Viertel des vollen Umfangs. Die äußere Befestigungslänge 7 ist dabei in zwei äußere Befestigungsabschnitte 9 unterteilt, die beide rechts unten bzw. links unten angeordnet sind und sich jeweils über ca. 45° erstrecken. Die äußere Befestigungslänge 7 ist somit in Umfangsrichtung 15 in die beiden äußeren Befestigungsabschnitte 9 unterteilt, die in Umfangsrichtung 15 voneinander beanstandet angeordnet sind.

Insbesondere ist somit zwischen dem Statorgehäuse 5 und dem jeweiligen Aufnahmeelement 2 außerhalb der jeweiligen äußeren Befestigungslänge 7 in radialer Richtung 16 ein äußerer Luftspalt 11 angeordnet.

Somit weist die elektrische Maschine 20 mehr jeweilige innere Befestigungsabschnitte 8 als jeweilige äußere Befestigungsabschnitte 9 auf.

Weiterhin sind bei der elektrischen Maschine 20 die jeweiligen inneren Befestigungsabschnitte 8 in Umfangsrichtung 15 versetzt zu den jeweiligen äußeren Befestigungsabschnitten 9 angeordnet. Das bedeutet, dass die jeweiligen inneren Befestigungsabschnitte 8 in Umfangsrichtung 15 nicht mit einem der äußeren Befestigungsabschnitte 9 überlappen.

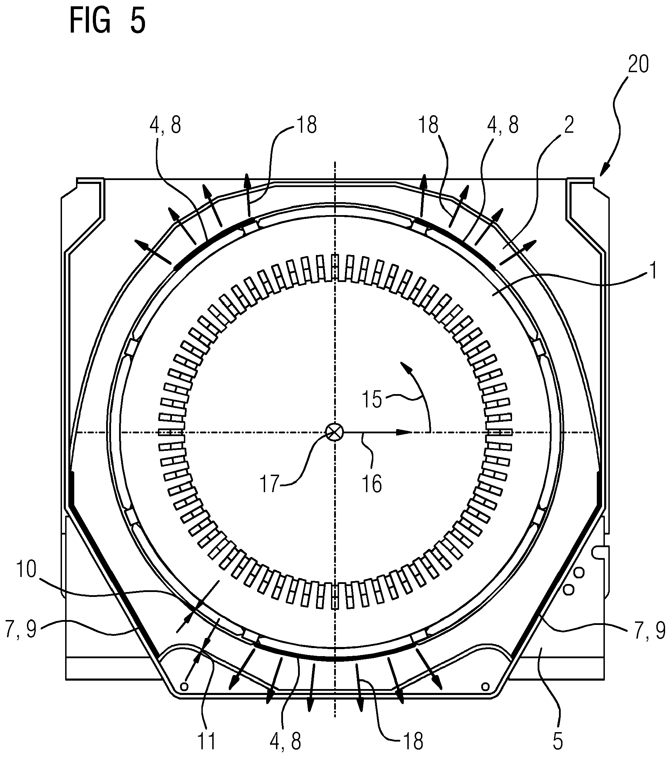

Wie in Figur 5 mit den Pfeilen 18 angedeutet, kann das jeweilige Aufnahmeelement 2 im Bereich des jeweiligen inneren Befestigungsabschnittes 8 in radialer Richtung 16 nach außen schwingen, wobei diese Schwingungen nicht direkt an das Statorgehäuse 5 weitergegeben werden, da die jeweiligen inneren Befestigungsabschnitte 8 in Umfangsrichtung 15 nicht mit einem der äußeren Befestigungsabschnitte 9 überlappen.

Das jeweilige Aufnahmeelement 2 ist dabei als Aufnahmering ausgestaltet, welcher den Stator 1 in Umfangsrichtung 15 vollständig umschließt.

Vorzugsweise ist das jeweilige Aufnahmeelement 2 im Bereich der jeweiligen inneren Befestigungslänge 4 mit dem Stator 1 verschweißt. Insbesondere ist das Statorgehäuse 5 im Bereich der jeweiligen äußeren Befestigungslänge 7 mit dem jeweiligen Aufnahmeelement 2 verschweißt.

Insbesondere weist die elektrische Maschine 20 eine elektrische Leistung von zumindest 1,5 MW auf, wobei der Stator 1 vorzugsweise einen Außendurchmesser von zumindest 900 mm aufweist.

Wie in den Figuren 7 und 8 mit den Pfeilen 19 angedeutet, kann während des Betriebs der elektrischen Maschine 20 Drehmoment vom Stator 1 an das jeweilige Aufnahmeelement 2 und schließlich das Gehäuse 5 übertragen werden, wobei das Gehäuse 5 (in Figur 7 links unten) eine Fußwange 23 und eine Fußaufhängung 22 aufweist, die das Drehmoment aufnehmen und schließlich an das darunter befindliche Fundament der elektrischen Maschine 20 abgeben. Die Fußwange 23 und die Fußaufhängung 22 werden dabei als Teil des Statorgehäuses 5 angesehen. Insbesondere handelt es sich bei der Fußwange 23 und der Fußaufhängung 22 um die oben erläuterte Auflagevorrichtung. Wie in den Figuren 7 und 8 zu sehen ist, ist diese Auflagevorrichtung auf axialer Höhe des dargestellten Aufnahmeelementes 2 angeordnet. Alternativ ist auch denkbar, dass die Auflagevorrichtung in axialer Richtung 17 versetzt zu dem Aufnahmeelement 2 angeordnet ist, bspw. ca. in der Mitte zwischen zwei benachbarten Aufnahmeelementen 2.

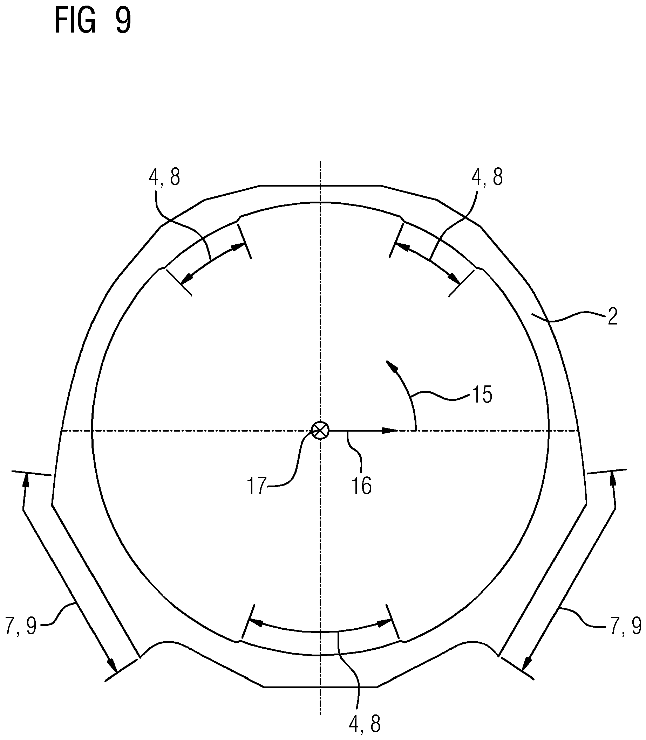

Figur 9 zeigt ein Aufnahmeelement 2 des ersten Ausführungsbeispiels der vorgeschlagenen elektrischen Maschine 20.

Gut zu erkennen ist, dass sich das Aufnahmeelement 2 im Bereich der inneren Befestigungslänge 4 bzw. der drei inneren Befestigungsabschnitte 8 weiter nach radial innen erstreckt als an den Bereichen zwischen den inneren Befestigungsabschnitten 8. Dadurch liegt das Aufnahmeelement 2 an den inneren Befestigungsabschnitten 8 von radial außen an dem passend dimensionierten, hohlzylindrischen Stator 1 auf und kann leicht mit diesem verbunden, bspw. verschweißt, werden. Bei den Bereichen zwischen den inneren Befestigungsabschnitte 8 bildet sich damit ein innerer Luftspalt 10, der weiter oben schon erläutert wurde. Dargestellt sind auch die äußere Befestigungslänge 7 bzw. die beiden äußeren Befestigungsabschnitte 9. In Umfangsrichtung zwischen den beiden äußeren Befestigungsabschnitten 9 bildet sich ein äußerer Luftspalt 11 zwischen dem Aufnahmeelement 2 und dem Statorgehäuse 5.

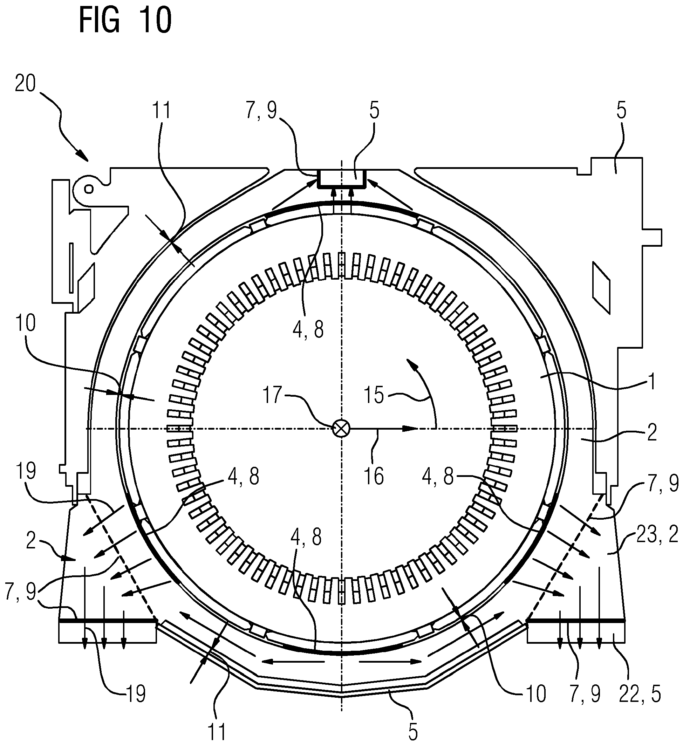

Die Figur 10 zeigt ein zweites Ausführungsbeispiel der vorgeschlagenen elektrischen Maschine 20. Die elektrische Maschine 20 weist wiederum eine Fußwange 23 sowie eine Fußaufhängung 22 auf, wobei die Fußwange 23 einstückig mit dem übrigen, jeweiligen Aufnahmeelement 2 ausgebildet ist und die Fußaufhängung 22 als Teil des Statorgehäuses 5 angesehen wird.

Die dargestellte elektrische Maschine 20 zeichnet sich unter anderem dadurch aus, dass sich die innere Befestigungslänge 4 entlang etwa 110° der jeweiligen inneren Abdeckungslänge 3 erstreckt, wobei sich die jeweilige innere Abdeckungslänge 3 um den vollen Umfang, also 360°, erstreckt. Die innere Befestigungslänge 4 ist dabei in vier innere Befestigungsabschnitte 8 unterteilt, von denen zwei zentral oben bzw. unten angeordnet sind und sich jeweils über ca. 30° bis 40° erstrecken und von denen die anderen beiden jeweils unten leicht versetzt zur Mitte angeordnet sind und sich jeweils über ca. 20° bis 30° erstrecken. Die innere Befestigungslänge 4 ist somit in Umfangsrichtung 15 in die vier inneren Befestigungsabschnitte 8 unterteilt, die in Umfangsrichtung 15 voneinander beabstandet angeordnet sind.

Insbesondere ist somit zwischen dem jeweiligen Aufnahmeelement 2 und dem Stator 1 außerhalb der jeweiligen inneren Befestigungslänge 4 in radialer Richtung 16 ein jeweiliger innerer Luftspalt 10 angeordnet.

Weiterhin zeichnet sich die dargestellte elektrische Maschine 20 unter anderem dadurch aus, dass sich die äußere Befestigungslänge 6 entlang etwa 80° erstreckt und sich die jeweiligen äußeren Abdeckungslänge 7 etwa entlang 340°, d.h. beinahe vollständig um das jeweilige Aufnahmeelement 2 herum, erstreckt. Dabei sind in Figur 10 einige Gehäuseteile, insb. in den beiden Bereichen rechts und links unten nicht dargestellt. Die äußere Befestigungslänge 7 ist dabei in drei äu-ßere Befestigungsabschnitte 9 unterteilt, von denen eine mittig oben angeordnet ist und sich über ca. 10° erstreckt und von denen die beiden anderen rechts unten bzw. links unten angeordnet sind und sich jeweils über ca. 30° bis 40° erstrecken. Die äußere Befestigungslänge 7 ist somit in Umfangsrichtung 15 in die drei äußeren Befestigungsabschnitte 9 unterteilt, die in Umfangsrichtung 15 voneinander beanstandet angeordnet sind.

Insbesondere ist somit zwischen dem Statorgehäuse 5 und dem jeweiligen Aufnahmeelement 2 außerhalb der jeweiligen äußeren Befestigungslänge 7 in radialer Richtung 16 ein äußerer Luftspalt 11 angeordnet.

Somit weist die elektrische Maschine 20 mehr jeweilige innere Befestigungsabschnitte 8 als jeweilige äußere Befestigungsabschnitte 9 auf.

Weiterhin ist bei der elektrischen Maschine 20 der jeweilige innere Befestigungsabschnitt 8 unten in der Mitte in Umfangsrichtung 15 versetzt zu den jeweiligen äußeren Befestigungsabschnitte und 9 angeordnet. Das bedeutet, dass dieser jeweilige innere Befestigungsabschnitt 8 in Umfangsrichtung 15 nicht mit einem der äußeren Befestigungsabschnitte 9 überlappt. Der jeweilige innere Befestigungsabschnitt 8 oben in der Mitte überlappt teilweise mit dem jeweiligen äußeren Befestigungsabschnitt 9, der ebenfalls oben in der Mitte angeordnet ist. Auch die weiteren jeweiligen inneren Befestigungsabschnitte 8 unten rechts und links überlappen teilweise mit den jeweiligen äußeren Befestigungsabschnitten 9, die ebenfalls unten rechts und unten links angeordnet sind.

Insbesondere handelt es sich bei der Fußwange 23 und der Fußaufhängung 22 um die oben erläuterte Auflagevorrichtung. Wie in der Figur 20 sehen ist, ist diese Auflagevorrichtung auf axialer Höhe des dargestellten Aufnahmeelementes 2 angeordnet. Alternativ ist auch denkbar, dass die Auflagevorrichtung in axialer Richtung 17 versetzt zu dem Aufnahmeelement 2 angeordnet ist, bspw. ca. in der Mitte zwischen zwei benachbarten Aufnahmeelementen 2.

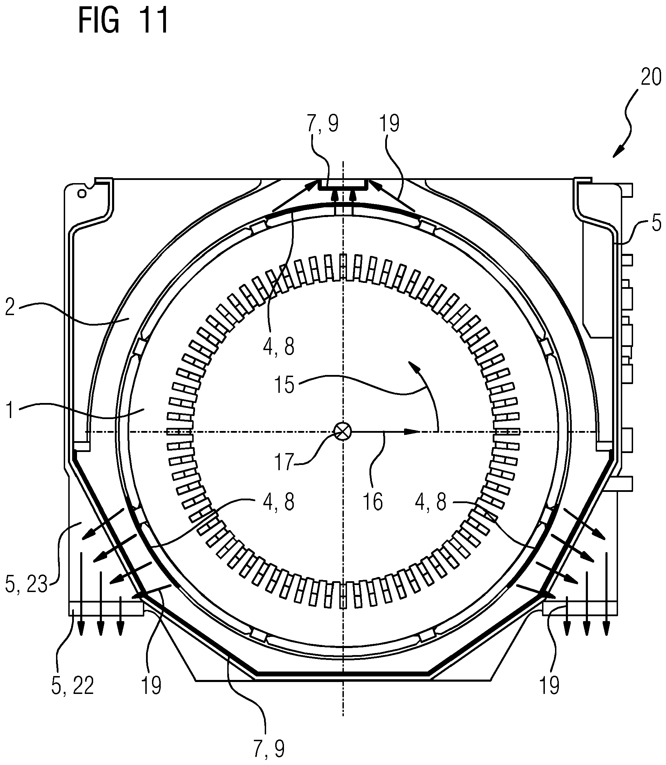

Die Figur 11 zeigt ein drittes Ausführungsbeispiel der vorgeschlagenen elektrischen Maschine.

Die dargestellte elektrische Maschine 20 zeichnet sich unter anderem dadurch aus, dass sich die innere Befestigungslänge 4 entlang etwa 90° der jeweiligen inneren Abdeckungslänge 3 erstreckt, wobei sich die jeweilige innere Abdeckungslänge 3 um den vollen Umfang, also 360°, erstreckt. Die innere Befestigungslänge 4 ist dabei in drei innere Befestigungsabschnitte 8 unterteilt, von denen einer zentral oben angeordnet ist und sich über ca. 30° bis 40° erstreckt und von denen die anderen beiden jeweils unten rechts und links angeordnet sind und sich jeweils über ca. 20° bis 30° erstrecken. Die innere Befestigungslänge 4 ist somit in Umfangsrichtung 15 in die drei inneren Befestigungsabschnitte 8 unterteilt, die in Umfangsrichtung 15 voneinander beabstandet angeordnet sind.

Weiterhin zeichnet sich die dargestellte elektrische Maschine 20 unter anderem dadurch aus, dass sich die äußere Befestigungslänge 6 entlang etwa 190° erstreckt und sich die jeweiligen äußeren Abdeckungslänge 7 um den vollen Umfang, d. h. 360°, erstreckt. Die äußere Befestigungslänge 7 ist dabei in zwei äußere Befestigungsabschnitte 9 unterteilt, von denen einer mittig oben angeordnet ist und sich über ca. 10° erstreckt und von denen der andere zentral unten angeordnet ist und sich über ca. 180° erstreckt. Die äußere Befestigungslänge 7 ist somit in Umfangsrichtung 15 in die zwei äußeren Befestigungsabschnitte 9 unterteilt, die in Umfangsrichtung 15 voneinander beanstandet angeordnet sind. Alternativ ist denkbar, dass sich die äußere Befestigungslänge 6 entlang etwa lediglich 180° erstreckt und dabei nur den unten angeordneten äußere Befestigungslänge 7 aufweist, der sich über ca. 180° erstreckt.

Somit weist die elektrische Maschine 20 (bei beiden Alternativen) mehr jeweilige innere Befestigungsabschnitte 8 als jeweilige äußere Befestigungsabschnitte 9 auf.

Dabei überlappen die beiden jeweilige innere Befestigungsabschnitt 8 unten rechts und links in Umfangsrichtung 15 vollständig mit dem zentral unten angeordneten jeweiligen äußeren Befestigungsabschnitt 9. Ferner überlappt der jeweilige innere Befestigungsabschnitt 8 oben in Umfangsrichtung 15 teilweise mit dem zentral oben angeordneten jeweiligen äußeren Befestigungsabschnitt 9, sofern dieser äußere Befestigungsabschnitt 9 vorgesehen ist.

Insbesondere handelt es sich bei der Fußwange 23 und der Fußaufhängung 22 um die oben erläuterte Auflagevorrichtung. Wie in der Figur 20 sehen ist, ist diese Auflagevorrichtung auf axialer Höhe des dargestellten Aufnahmeelementes 2 angeordnet. Alternativ ist auch denkbar, dass die Auflagevorrichtung in axialer Richtung 17 versetzt zu dem Aufnahmeelement 2 angeordnet ist, bspw. ca. in der Mitte zwischen zwei benachbarten Aufnahmeelementen 2.

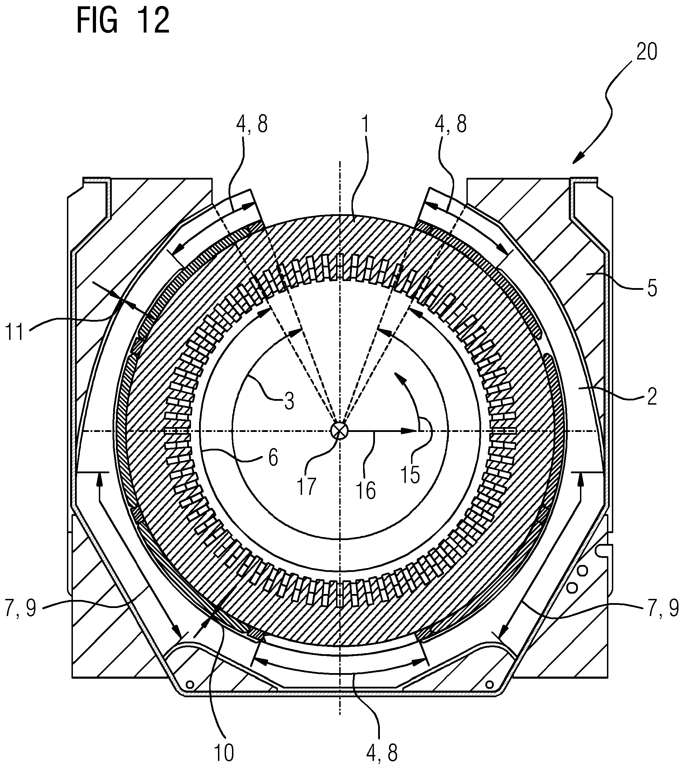

Die Figur 12 zeigt ein viertes Ausführungsbeispiel der vorgeschlagenen elektrischen Maschine 20. Die dargestellte elektrische Maschine 20 weist dabei einige Ähnlichkeiten zum ersten Ausführungsbeispiel auf. Allerdings erstreckt sich das Statorgehäuse 5 in Umfangsrichtung 15 nicht mehr vollständig um den Stator 1, sondern lediglich entlang ca. 300°. Auch das jeweilige Aufnahmeelement 2 erstreckt sich in Umfangsrichtung nicht mehr vollständig um den Stator 1, sondern lediglich entlang ca. 320°.

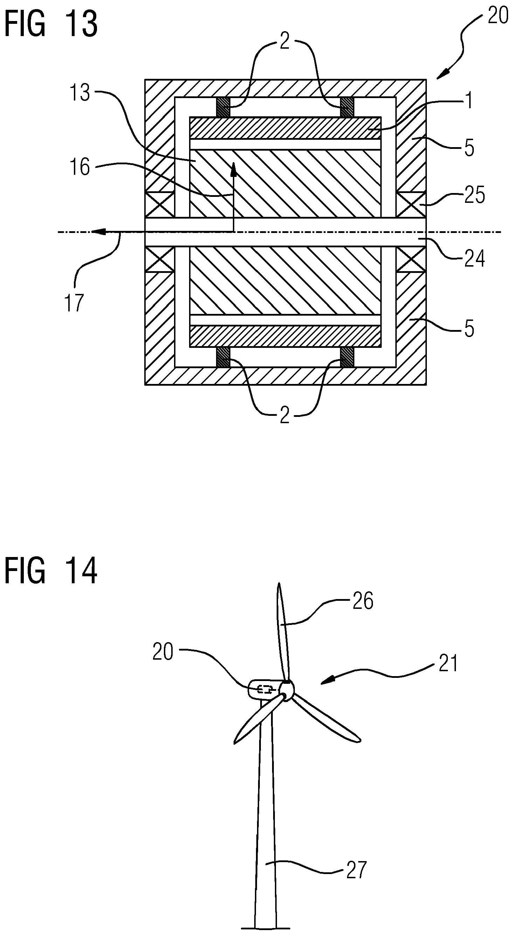

Die Figur 13 zeigt ein fünftes Ausführungsbeispiel der vorgeschlagenen elektrischen Maschine 20. Dargestellt ist dabei ein Längsschnitt entlang der axialen Richtung 17 der elektrischen Maschine 20. Die elektrische Maschine 20 weist einen Rotor 13 auf, der drehfest mit einer Welle 24 verbunden ist. Die Welle 24 ist über Lager 25 drehbar in einem Statorgehäuse 5 gelagert, in welchem zwei Aufnahmeelemente 2 und der hohlzylinderförmiger Stator 1 angeordnet sind. Der Stator 1, die Aufnahmeelemente 2 und das Statorgehäuse 5 können dabei wie oben erläutert ausgestaltet sein.

Vorzugsweise handelt es sich bei der elektrischen Maschine 20 um einen elektrischen Generator, der bei einer Windkraftanlage zum Einsatz kommt.

Die Figur 14 zeigt ein Ausführungsbeispiel der vorgeschlagenen Windkraftanlage 21. Die Windkraftanlage 21 weist einen Turm 27 auf, auf welchem eine Gondel mit einer elektrischen Maschine 20 drehbar gelagert ist. Die elektrische Maschine 20 bzw. ihr Rotor 13 ist drehfest mit einem Propeller aufweisend drei Propellerblätter 26 verbunden.

## Patentansprüche

1. Elektrische Maschine (20), insbesondere elektrischer Generator für eine Windkraftanlage (21), aufweisend
- einen hohlzylinderförmigen Stator (1),
- zumindest zwei Aufnahmeelemente (2),
wobei das jeweilige Aufnahmeelement (2) den Stator (1) jeweils in Umfangsrichtung (15) entlang einer jeweiligen inneren Abdeckungslänge (3) zumindest teilweise umschließt und wobei das jeweilige Aufnahmeelement (2) in Umfangsrichtung (15) entlang einer jeweiligen inneren Befestigungslänge (4), die in mehrere innere Befestigungsabschnitte (8) unterteilt ist, drehfest mit dem Stator (1) verbunden ist, und
- ein Statorgehäuse (5),
wobei das Statorgehäuse (5) das jeweilige Aufnahmeelement (2) in Umfangsrichtung (15) entlang einer jeweiligen äußeren Abdeckungslänge (6) zumindest teilweise umschließt und
wobei das Statorgehäuse (5) in Umfangsrichtung (15) entlang einer jeweiligen äußeren Befestigungslänge (7), die in mehrere äußere Befestigungsabschnitte (9) unterteilt ist, drehfest mit dem jeweiligen Aufnahmeelement (2) verbunden ist, und wobei
- sich die jeweilige innere Befestigungslänge (4) höchstens entlang der Hälfte der jeweiligen inneren Abdeckungslänge (3) erstreckt und/oder
- sich die jeweilige äußere Befestigungslänge (7) höchstens entlang von zwei Dritteln der jeweiligen äußeren Abdeckungslänge (6) erstreckt,
**dadurch gekennzeichnet, dass**
sich die jeweilige innere Befestigungslänge (4) höchstens entlang 120° und mindestens entlang 50° insbesondere entlang 50° bis 80°, in Umfangsrichtung (15) erstreckt, und sich die jeweilige äußere Befestigungslänge (7) höchstens entlang 200° und mindestens entlang 60°, insbesondere entlang 80° bis 120°, in Umfangsrichtung (15) erstreckt, und dass die inneren Befestigungsabschnitte (8) zur Reduzierung der Schallübertragung auf das Statorgehäuse (5) in Umfangsrichtung (15) versetzt zu den äußeren Befestigungsabschnitten (9) angeordnet sind, also nicht mit den äußeren Befestigungsabschnitten (9) überlappen, oder dass, wenn die inneren und die äußeren Befestigungsabschnitte (8, 9) in Umfangsrichtung (15) nicht versetzt angeordnet sind, sondern überlappen, dann zur Reduzierung der Schallübertragung auf das Statorgehäuse (5) im Betriebszustand der Maschine (20), also bei waagrecht verlaufender Zentralachse (17), die inneren und die äußeren Befestigungsabschnitte (8, 9) nur im unteren rechten und im unteren linken Quadranten im Bereich der Auflagevorrichtungen, mittels welcher das während des Betriebs der elektrischen Maschine auftretende Drehmoment an ein Fundament oder an eine Auflagefläche abgebbar ist, angeordnet sind, oder, wenn zusätzlich oben zentral eine äußere Befestigungslänge (7) vorgesehen ist, die inneren und die äu-ßeren Befestigungsabschnitte (8, 9) auch mittig oben im Bereich der vertikalen Zentralachse angeordnet sind.

2. Elektrische Maschine (20) nach Anspruch 1,
wobei das jeweilige Aufnahmeelement (2) als Aufnahmering ausgestaltet ist, welcher den Stator (1) in Umfangsrichtung vollständig umschließt.

3. Elektrische Maschine (20) nach einem der vorherigen Ansprüche,
wobei das jeweilige Aufnahmeelement (2) in Umfangsrichtung (15) entlang der jeweiligen inneren Befestigungslänge (4) mit dem Stator (1) mechanisch lösbar und/oder formschlüssig verbunden ist.

4. Elektrische Maschine (20) nach einem der vorherigen Ansprüche,
wobei das Statorgehäuse (5) in Umfangsrichtung (15) entlang der jeweiligen äußeren Befestigungslänge (7) mit dem jeweiligen Aufnahmeelement (2) mechanisch lösbar oder stoffschlüssig verbunden, insbesondere verschweißt, ist.

5. Elektrische Maschine (20) nach einem der vorhergehenden Ansprüche,
aufweisend mindestens so viele jeweilige innere Befestigungsabschnitte (8) wie jeweilige äußere Befestigungsabschnitte (9), vorzugsweise mehr jeweilige innere Befestigungsabschnitte (8) als jeweilige äußere Befestigungsabschnitte (9).

6. Elektrische Maschine (20) nach einem der vorhergehenden Ansprüche,
wobei zumindest einer der jeweiligen inneren Befestigungsabschnitte (8) in Umfangsrichtung (15) versetzt zu den jeweiligen äußeren Befestigungsabschnitten (9) angeordnet ist, wobei vorzugsweise zwei oder mehr oder alle der jeweiligen inneren Befestigungsabschnitte (8) in Umfangsrichtung (15) versetzt zu den jeweiligen äußeren Befestigungsabschnitten (9) angeordnet sind.

7. Elektrische Maschine (20) nach einem der vorhergehenden Ansprüche,
wobei zumindest einer der jeweiligen inneren Befestigungsabschnitte (8) in Umfangsrichtung (15) mit zumindest einem der jeweiligen äußeren Befestigungsabschnitte (9) überlappt, wobei vorzugsweise zwei oder mehr oder alle der jeweiligen inneren Befestigungsabschnitte (8) in Umfangsrichtung (15) mit zumindest einem der jeweiligen äußeren Befestigungsabschnitte (9) überlappen.

8. Elektrische Maschine (20) nach einem der vorherigen Ansprüche,
wobei zwischen dem jeweilige Aufnahmeelement (2) und dem Stator (1) außerhalb der jeweiligen inneren Befestigungslänge (4) in radialer Richtung (16) ein innerer Luftspalt (10) angeordnet ist.

9. Elektrische Maschine (20) nach einem der vorherigen Ansprüche,
wobei zwischen dem Statorgehäuse (5) dem jeweiligen Aufnahmeelement (2) außerhalb der jeweiligen äußeren Befestigungslänge (7) in radialer Richtung (16) ein äußerer Luftspalt (11) angeordnet ist.

10. Elektrische Maschine (20) nach einem der vorherigen Ansprüche,
wobei der Stator (1) einen Außendurchmesser (12) von zumindest 900 mm aufweist und
wobei die elektrische Maschine (20) eine elektrische Leistung von zumindest 1,5 MW aufweist.

11. Windkraftanlage (21) aufweisend eine elektrische Maschine (20) nach einem der vorherigen Ansprüche

## Claims

1. Electric machine (20), in particular electric generator for a wind power plant (21), having
- a hollow-cylindrical stator (1);
- at least two receptacle elements (2);
wherein the respective receptacle element (2) encloses in each case the stator (1) at least partially in the circumferential direction (15) along a respective inner covering length (3), and wherein the respective receptacle element (2) is co-rotationally connected to the stator (1) in the circumferential direction (15) along a respective inner fastening length (4), the latter being subdivided into a plurality of inner fastening portions (8); and
- a stator housing (5);
wherein the stator housing (5) encloses the respective receptacle element (2) at least partially in the circumferential direction (15) along a respective outer covering length (6), and
wherein the stator housing (5) is co-rotationally connected to the respective receptacle element (2) in the circumferential direction (15) along a respective outer fastening length (7), the latter being subdivided into a plurality of outer fastening portions (9); and wherein
- the respective inner fastening length (4) extends at most along half the respective inner covering length (3); and/or
- the respective outer fastening length (7) extends at most along two thirds of the respective outer covering length (6),
**characterized in that**
the respective inner fastening length (4) extends at most along 120°, and at least along 50°, in particular along 50° to 80°, in the circumferential direction (15), and the respective outer fastening length (7) extends at most along 200°, and at least along 60°, in particular along 80° to 120°, in the circumferential direction (15), and **in that** the inner fastening portions (8), for reducing the transmission of noise to the stator housing (5), are disposed so as to be offset from the outer fastening portions (9) in the circumferential direction (15), thus not overlapping the outer fastening portions (9), or **in that** - if the inner and the outer fastening portions (8, 9) are not disposed so as to be offset in the circumferential direction (15) but so as to overlap - for reducing the transmission of noise to the stator housing (5) in the operating state of the machine (20), thus when the central axis (17) runs horizontally, the inner and the outer fastening portions (8, 9) are disposed only in the lower right and in the lower left quadrant in the region of the support devices by means of which the torque arising during the operation of the electric machine is able to be discharged to a foundation or to a support surface, or - if an outer fastening length (7) is additionally provided so as to be central at the top - the inner and the outer fastening portions (8, 9) are also disposed so as to be central at the top in the region of the vertical central axis.

2. Electric machine (20) according to Claim 1,
wherein the respective receptacle element (2) is designed as a receptacle ring which completely encloses the stator (1) in the circumferential direction.

3. Electric machine (20) according to one of the preceding claims,
wherein the respective receptacle element (2) is connected to the stator (1) in the circumferential direction (15) along the respective inner fastening length (4) in a mechanically releasable and/or formfitting manner.

4. Electric machine (20) according to one of the preceding claims,
wherein the stator housing (5) is connected to the respective receptacle element (2) in the circumferential direction (15) along the respective outer fastening length (7) in a mechanically releasable or materially integral manner, in particular welded.

5. Electric machine (20) according to one of the preceding claims,
having at least as many respective inner fastening portions (8) as there are respective outer fastening portions (9), preferably more respective inner fastening portions (8) than there are respective outer fastening portions (9).

6. Electric machine (20) according to one of the preceding claims,
wherein at least one of the respective inner fastening portions (8) is disposed so as to be offset from the respective outer fastening portions (9) in the circumferential direction (15), wherein preferably two, or more or all, of the respective inner fastening portions (8) are disposed so as to be offset from the respective outer fastening portions (9) in the circumferential direction (15).

7. Electric machine (20) according to one of the preceding claims,
wherein at least one of the respective inner fastening portions (8) overlaps at least one of the respective outer fastening portions (9) in the circumferential direction (15), wherein preferably two, or more or all, of the respective inner fastening portions (8) overlap at least one of the respective outer fastening portions (9) in the circumferential direction (15).

8. Electric machine (20) according to one of the preceding claims,
wherein an inner air gap (10) is disposed in the radial direction (16) between the respective receptacle element (2) and the stator (1) outside the respective inner fastening length (4).

9. Electric machine (20) according to one of the preceding claims,
wherein an outer air gap (11) is disposed in the radial direction (16) between the stator housing (5) and the respective receptacle element (2) outside the respective outer fastening length (7).

10. Electric machine (20) according to one of the preceding claims,
wherein the stator (1) has an external diameter (12) of at least 900 mm, and
wherein the electric machine (20) has an electrical output of at least 1.5 MW.

11. Wind turbine (21) comprising an electric machine (20) according to one of the preceding claims.

## Revendications

1. Machine électrique (20), notamment générateur électrique destiné à une éolienne (21), ladite machine électrique comprenant
- un stator (1) en forme de cylindre creux,
- au moins deux éléments de réception (2),
l'élément de réception respectif (2) entourant au moins partiellement le stator (1) dans la direction circonférentielle (15) sur une longueur de recouvrement intérieure respective (3) et l'élément de réception respectif (2) étant relié solidairement en rotation au stator (1) dans la direction circonférentielle (15) sur une longueur de fixation intérieure respective (4) qui est divisée en une pluralité de portions de fixation intérieures (8), et
- un boîtier de stator (5),
le boîtier de stator (5) entourant au moins partiellement l'élément de réception respectif (2) dans la direction circonférentielle (15) sur une longueur de recouvrement extérieure respective (6) et
le boîtier de stator (5) étant relié solidairement en rotation à l'élément de réception respectif (2) dans la direction circonférentielle (15) sur une longueur de fixation extérieure respective (7) qui est divisée en plusieurs portions de fixation extérieures (9), et
- la longueur de fixation intérieure respective (4) s'étendant au maximum sur la moitié de la longueur de recouvrement intérieure respective (3) et/ou
- la longueur de fixation extérieure respective (7) s'étendant au maximum sur les deux tiers de la longueur de recouvrement extérieure respective (6),
**caractérisée en ce que**
la longueur de fixation intérieure respective (4) s'étend au maximum sur 120° et au moins sur 50°, en particulier sur 50° à 80°, dans la direction circonférentielle (15), et la longueur de fixation extérieure respective (7) s'étend au maximum dans la direction circonférentielle (15) sur 200° et au moins sur 60°, en particulier sur 80° à 120°,
et les portions de fixation intérieures (8) sont disposées de manière décalée par rapport aux portions de fixation extérieures (9) dans la direction circonférentielle (15), c'est-à-dire sans chevaucher les portions de fixation extérieures (9), afin de réduire la transmission acoustique au boîtier de stator (5)
ou, si les portions de fixation intérieures et extérieures (8, 9) ne sont pas disposées de manière décalée dans la direction circonférentielle (15), mais se chevauchent, alors pour réduire la transmission acoustique au boîtier de stator (5) dans l'état de fonctionnement de la machine (20), c'est-à-dire lorsque l'axe central (17) s'étend horizontalement, les portions de fixation intérieures et extérieures (8, 9) sont disposées uniquement dans les quadrants inférieur droit et inférieur gauche dans la zone des dispositifs de support au moyen desquels le couple se produisant pendant le fonctionnement de la machine électrique peut être délivré à une fondation ou à une surface de support ou, si une longueur de fixation extérieure (7) est en outre prévue au centre en haut, les portions de fixation intérieure et extérieure (8, 9) sont également disposées au centre en haut dans la zone de l'axe central vertical.

2. Machine électrique (20) selon la revendication 1, l'élément de réception respectif (2) étant conçu sous la forme d'un anneau de réception qui entoure complètement le stator (1) dans la direction circonférentielle.

3. Machine électrique (20) selon l'une des revendications précédentes,
l'élément de réception respectif (2) étant relié mécaniquement de manière amovible et/ou par complémentarité de formes au stator (1) dans la direction circonférentielle (15) sur la longueur de fixation intérieure respective (4).

4. Machine électrique (20) selon l'une des revendications précédentes,
le boîtier de stator (5) étant relié mécaniquement de manière amovible ou par une liaison de matière, en particulier soudé, à l'élément de réception respectif (2) dans la direction circonférentielle (15) sur la longueur de fixation extérieure respective (7).

5. Machine électrique (20) selon l'une des revendications précédentes, comportant au moins autant de portions de fixation intérieures respectives (8) que de portions de fixation extérieures respectives (9), de préférence davantage de portions de fixation intérieures respectives (8) que de portions de fixation extérieures respectives (9).

6. Machine électrique (20) selon l'une des revendications précédentes,
l'une au moins des portions de fixation intérieures respectives (8) étant disposée de manière décalée par rapport aux portions de fixation extérieures respectives (9) dans la direction circonférentielle (15), de préférence deux portions de fixation intérieures respectives (8) ou plus, ou la totalité de celles-ci, étant disposées de manière décalée par rapport aux portions de fixation extérieures respectives (9) dans la direction circonférentielles (15) .

7. Machine électrique (20) selon l'une des revendications précédentes,
au moins une des portions de fixation intérieures respectives (8) chevauchant au moins une des portions de fixation extérieures respectives (9) dans la direction circonférentielle (15), de préférence deux portions de fixation intérieures respectives (8) ou plus, ou la totalité de celles-ci, chevauchant au moins une des portions de fixation extérieures respectives (9) dans la direction circonférentielle (15).

8. Machine électrique (20) selon l'une des revendications précédentes,
un entrefer intérieur (10) étant ménagé entre l'élément de réception respectif (2) et le stator (1) à l'extérieur de la longueur de fixation intérieure respective (4) dans la direction radiale (16).

9. Machine électrique (20) selon l'une des revendications précédentes,
un entrefer extérieur (11) étant ménagé entre le boîtier de stator (5) et l'élément de réception respectif (2) à l'extérieur de la longueur de fixation extérieure respective (7) dans la direction radiale (16) .

10. Machine électrique (20) selon l'une des revendications précédentes,
le stator (1) ayant un diamètre extérieur (12) d'au moins 900 mm et
la machine électrique (20) ayant une puissance électrique d'au moins 1,5 MW.

11. Éolienne (21) comprenant une machine électrique (20) selon l'une des revendications précédentes.
